# EUROPÄISCHE PATENTSCHRIFT

(11) **EP 0 691 562 B1**
(45) Veröffentlichungstag und Bekanntmachung des Hinweises auf die Patenterteilung: **22.10.1997**
(21) Anmeldenummer: 95110644.2
(22) Anmeldetag: 08.07.1995
(51) Int. Cl.: G02C 7/08

(54) **Hyperokular für ein Brillenglas**
Additional ocular for a spectacle lens
Oculaire supplémentaire pour verre de lunettes

(30) Priorität: 08.07.1994 DE 9410741 U; 14.07.1994 DE 9411416 U; 12.04.1995 EP 95105561
(43) Veröffentlichungstag der Anmeldung: 10.01.1996
(73) Patentinhaber: ESCHENBACH OPTIK GmbH + Co., 90409 Nürnberg (DE)
(72) Erfinder: Winkler, Kurt, D-90574 Rosstal (DE)
(74) Vertreter: Tergau, Enno, Dipl.-Ing.

(56) Entgegenhaltungen:
- EP-A- 0 341 998
- DE-A- 3 905 041
- FR-A- 1 538 221
- US-A- 2 393 959
- US-A- 4 645 317
- US-A- 5 071 244
- US-A- 5 243 366
- US-A- 5 266 977
- US-A- 5 349 393

## Beschreibung

Personen mit hochgradigen Sehfehlern benutzen häufig Brillen mit sogenannten Hyperokularen (HO). Es handelt sich dabei um Brillen mit stark vergrößernden Brillengläsern, die im wesentlichen für Lesezwecke als Akkomodations- und Vergrößerungszusatz eingesetzt werden. Diese weisen in der Praxis eine sechs- bis zwölffache Vergrößerung auf.

Um einen Brillenwechsel zu vermeiden, ist es bekannt, das HO in einen Teil eines herkömmlichen Brillenglases einzuschleifen. Ein derartiges Brillenglasauch Bifokalglas genannt - eignet sich dann beispielsweise für die Nah- und Fernsicht. Das eingeschliffene HO verleiht dem Brillenträger jedoch einen oft als störend empfundenen Gesichtsausdruck. Der Vergrößerungsbereich ist begrenzt.

Auf dem Markt sind weiterhin Hyperokulare bekannt, die als aufsteckbare Vorhänger ausgebildet sind. Derartige Vorhänger sind sehr auffällig und werden ebenfalls vom Benutzer als störend empfunden. Darüber hinaus ist das Aufund Abnehmen des Vorhängers unpraktisch.

Aus der Druckschrift " Univision - Low Vision Lens -", Unilens Corp., USA, 1993, ist ein HO aus Acryl bekannt, das mittels einer Klebefolie auf der Objektseite des Brillenglases befestigt wird. Die dem Brillenglas zugewandte Seite des HO ist dabei an die Oberflächenkontur des Brillenglases angepaßt. Dieses HO eignet sich offenbar jedoch nur für Vergrößerungen bis zum Faktor zehn.

In der US 5,266,977 ist ein Hyperocular beschrieben, bei dem die die Linse tragende Fassung nach Art eines Saugnapfes ausgebildet ist. Die im Montagezustand dem Brillenglas zugewandte Seite der Fassung weist eine schräg verlaufende und nach Art eines Kegelmantelstumpfes ausgebildete Saugnapfwand auf, die zur Befestigung des Hyperoculars auf die Oberfläche des Brillenglases aufgepreßt wird und die sich dort nach Art eines Saugnapfes festsaugt. Nachteilig bei dem bekannten Hyperocular ist, daß die Fassung zwangsläufig ein in sich geschlossener Ring sein muß, damit zwischen Brillenglasoberfläche und Hyperocular ein abgeschlossener Unterdruckraum gebildet werden kann. Ein teilweises Einfassen der Hyperocularlinse oder gar eine Befestigung an einigen Punkten ist daher nicht möglich. Nachteilig ist auch, daß zwangsläufig ein relativ großer Abstand zwischen der objektseitigen Brillenglasoberfläche und der Hyperocularlinse vorhanden ist. Dieser Abstand ist durch die Rückstellbewegung der Saugnapfwand nach dem Anpressen der Saugnapfwand des Hyperoculars an die Brillenglasoberfläche bedingt. Nachteilig ist weiterhin, daß die Saugnapfwand einen relativ großen Bereich des Brillenglassehfeldes nach Art eines Ringes abdeckt. Dieser Bereich geht selbst dann als Sehfeld verloren, wenn die Saugnapfwand aus durchsichtigem Material gefertigt ist, da hier unkontrollierbare Streu- und Beugungseffekte auftreten würden. Darüber hinaus ist dieses Hyperocular kaum an der Augenseite eines Brillenglases befestigbar, da diese Seite konkav gekrümmt ist, was die saugnapfartige Befestigung des Hyperoculars erschwert.

Den bekannten Hyperokularen ist der Nachteil gemeinsam, daß die Hyperokular-Linsen nur sehr aufwendig aus der Haltefassung entnehmbar sind, um sie gegen eine andere, etwa stärker vergrößernde Linse auszutauschen oder um sie zu reinigen. Eine Verbesserung in dieser Hinsicht bietet ein in der DE 39 05 041 A1 beschriebener Augenvorsatz, bei dem Halteelemente an der Innenseite, also augenseitig an dem Sichtglas einer Taucherbrille angeklebt sind. An diesen Halteelementen ist ein Korrektionsvorsatz, also ein Hyperokular, lösbar befestigt. Die Befestigung erfolgt über Dauermagnete, wobei jeweils ein Dauermagnet am Halteelement und ein Dauermagnet seitlich am Hyperokular angeordnet ist. Nachteilig bei diesem Hyperokular ist zunächst das durch die Dauermagnete erheblich erhöhte Gewicht. Insbesondere bei Korrektionsbrillen für den täglichen Gebrauch oder etwa zum Ausführen von feinmechanischen, mit Vorsatzlupen durchgeführten Arbeiten wird aus Gründen des Tragekomforts und der Ergonomie auf ein geringes Brillengewicht geachtet. Es werden aus diesem Grunde Kunststoffe oder Leichtmetalle für Brillengestelle und Kunststoffe für Brillengläser verwendet. Der Vorteil des Einsatzes solcher Leichtmaterialien wird aber durch die Verwendung von Dauermagneten wieder zunichte gemacht, insbesondere wenn für jedes Auge ein Hyperokular mit beispielsweise einer 2-Punkt-Befestigung vorgesehen ist. In diesem Falle wären vom Brillenbenutzer insgesamt 8 Dauermagnete zu tragen. Nachteilig ist weiterhin, daß die durch Dauermagnete hervorgerufene Haltekraft für viele Anwendungsfälle nicht ausreichend ist. Einer Erhöhung der Haltekraft durch Einsatz größerer Dauermagnete sind dann aus Gewichtsgründen enge Grenzen gesetzt. Nachteilig bei den bekannten Hyperokularen ist schließlich noch, daß ihre Fertigung aufwendig und teuer ist, da für die Montage der Dauermagnete zusätzliche Fertigungsschritte notwendig sind.

Davon ausgehend ist es die Aufgabe der Erfindung, ein Hyperokular vorzuschlagen, das leicht ist, mit hoher Haltekraft lösbar an einer Brille befestigbar und auf einfache Weise herstellbar ist.

Diese Aufgabe wird durch ein Hyperokular gemäß Anspruch 1 gelöst.

Die erfindungsgemäß an der Linse und an den Halteelementen vorzusehenden und die Schnappverbindung bewirkenden Strukturen können beispielsweise ganz einfach durch einen Spritzvorgang an die genannten Teile angeformt werden, ohne daß zusätzliche Montageschritte und zusätzliche Teile notwendig wären. Die die Schnappverbindung bewirkenden Strukturen müssen auch nicht zwangsläufig sehr groß ausgebildet sein, um hohe Haltefestigkeiten zu erreichen. Dadurch, daß das Halteelement den Rand der Linse nur teilweise umfaßt, kann die Linse zum Lösen der Schnappverbindung an den freibleibenden Randbereichen gefaßt und manipuliert werden. Ein weiterer Vorteil eines erfindungsgemäßen Hyperokulars liegt auch darin, daß die sich an der Linse und an den Halteelementen befindlichen, die Schnappverbindung bewirkenden Strukturen auf einfache Weise so ausgebildet werden können, daß sich die Linsen bei unveränderter Richtung ihrer optischen Achse gleichermaßen an augen- und objektseitig am Brillenglas fixierten Halteelementen befestigen lassen. Es ist dann möglich, die gleichen Halteelemente und Linsen sowohl für eine Anordnung vor dem Brillenglas als auch hinter dem Brillenglas zu verwenden.

Vorteilhafte Weiterbildungen ergeben sich aus den übrigen Ansprüchen.

Dazu ist eine Haltefassung vorgesehen, die die Linse des Hyperokulars zumindest teilweise umschließt. Die im Montagezustand dem Brillenglas zugewandte Stirnfläche der Haltefassung ist der Oberflächenform des Brillenglases entsprechend angepaßt. Je nach Dicke, Stärke oder optischer Wirkung der Hyperokularlinse kann diese innerhalb der Haltefassung in einem gewünschten Abstand vom Brillenglas positioniert und somit in ihrer optischen Wirkung eingestellt werden. Die Haltefassung ist bevorzugt auf dem Brillenglas aufgeklebt, wobei eine Befestigung objekt- oder augenseitig möglich ist. Die Haltefassung ist je nach gewählter Montageseite entsprechend an die Kontur des Brillenglases angepaßt.

Um einen geradlinigen Übergang zwischen den beiden so realisierten Sehbereichen zu erzielen, kann die Hyperokularlinse und gegebenenfalls das Hyperokular in seiner Gesamtheit nach Art eines Kreisabschnittes ausgebildet sein.

Weiterhin ist vorgesehen, daß das Hyperokular - unabhängig, ob es objekt- oder augenseitig befestigt wird - im wesentlichen zumindest an zwei Punkten, alternativ an drei Punkten, auf dem Brillenglas mit Befestigungsmitteln fixiert wird. Wenn hier von Befestigungsmitteln die Rede ist, so sind darunter Mittel zu verstehen, mit denen die Hyperokularlinse entweder direkt, beispielsweise durch eine Verklebung oder Verschraubung, am Brillenglas befestigt sind, oder es sind Mittel, die sich nur auf der Brillenglasoberfläche abstützen. Im zuletzt genannten Fall erfolgt die weitere Fixierung des Hyperokulars durch zusätzliche Befestigungsmittel, wie etwa einem Drahtbügel, einem Nylonfaden oder einem Gummiband, an dem Brillenglas. Diese Art der Halterung oder Fixierung auf dem Brillenglas hat zum Vorteil, daß das HO mit besonders einfachen Mitteln, ohne daß es besonders angepaßt sein muß, in seiner Form stabil auf dem Brillenglas befestigt ist. Dies gilt für die verschiedensten HO-Formen, wie sie oben und nachfolgend beispielhaft beschrieben sind. Die Befestigungspunkte können auch in Teilpunkte unterteilt sein. Bei dieser Befestigungsart ist die Haftstärke weitgehend unabhängig von der Krümmung des normalen Brillenglases. Bei starken Sehfehlern hat das normale Brillenglas in der Regel eine sehr starke Krümmung. Das erschwert beim Aufkleben von runden HOs erheblich die Haftfestigkeit. Die Punktbefestigung schafft hier Abhilfe. Sie schafft vor allen Dingen Unabhängigkeit von der Linsenkrümmung der Brille. Heute sind Haftvermittler von erheblicher Dicke und Flexibilität bekannt, die auch bei starken Krümmungen des Brillenglases eine einfache Befestigung oder Adaption ermöglichen, ohne daß die Haftfestigkeit beeinträchtigt wird.

Eine weitere wesentliche Verbesserung für stark Sehbehinderte kann dadurch erzielt werden, daß ein derartiges HO vorzugsweise mit einer schmalen breiten Form, auf einem Bifokalbrillenglas, wie aus dem Stand der Technik bekannt, montiert wird. Auf diese einfache Weise entsteht ein Trifokal-Brillenglas, mit dem drei Sehbereiche realisiert werden können. Dadurch können auch stärkste Sehbehinderungen reguliert werden. Die schmale balkenförmige Ausbildung des HO ermöglicht ein breites, nahezu unbegrenztes Sehfeld, wobei durch den balkenförmigen Sehausschnitt eine Orientierungsunterstützung gegeben ist.

Auch bei der Trifokalanwendung ist selbstverständlich eine objekt- oder augenseitige Befestigung des HOs möglich.

Ein derartiges HO kann mit einer plankonvexen, bikonvexen, asphärischen oder biasphärischen Linse mit ca. 10 bis 30 mm Durchmesser und einer maximalen Mittendicke bis etwa 10 mm ausgeführt sein. Die Außenkontur der Linse kann verschiedenste Formen haben, wobei für eine Zweipunktbefestigung bevorzugt eine schmale balkenförmige Form -auch oval oder abgerundet - zur Anwendung kommt. Es sind jedoch aber auch eckige, oder wie bereits oben beschrieben, kreisabschnittförmige Formen denkbar. Das Hyperokular wird vorzugsweise mittels einer Klebebefestigung, insbesondere einem Klebering, auf dem Brillenglas fixiert. Gegebenenfalls können aber auch andere Befestigungsmöglichkeiten, z.B. Drahtgebiege, Schrauben, Klammern, Nylonfaden oder Saughalterungen zur Anwendung kommen. Dabei sind optisch günstige Lösungen bevorzugt.

Das neue Hyperokular ist in seiner augenseitigen Befestigungsposition sehr unauffällig, wodurch für den Brillenträger ein vorteilhafter kosmetischer Effekt erzielt wird. Gleichzeitig können dabei - bedingt durch den kurzen Abstand vom Auge zur Linse - bei kleinsten Linsenabmaßen große Sehfelder verwirklicht werden. Insbesondere die von der Kreis- oder Quadratform abweichenden Formen zeichnen sich durch eine geringe Baugröße und ein geringes Gewicht aus. Durch die günstige Befestigung sind sogar Vergrößerungen bis zum Zwanzigfachen möglich. Bevorzugte Anwendungen sind beispielsweise bei sechs- bis zwölffacher Vergrößerung gegeben.

Eine weitere vorteilhafte Gestaltung der Erfindung besteht darin, daß die Hyperokularlinse an den Befestigungsmitteln bzw. an der Haltefassung lösbar befestigt ist. Es ist dadurch möglich, den sich unterhalb bzw. hinter der Hyperokularlinse befindlichen Bereich der Brillenglasoberfläche leicht zu reinigen. Insbesondere ist dies zweckmäßig bei Hyperokularlinsen, die die Form eines Kreisabschnittes oder eines Balkens haben, da hier der sich hinter der Hyperokularlinse befindliche Bereich besonders leicht verschmutzen kann. Durch die genannte Ausgestaltung ist ein Wechsel der Hyperokularlinse - etwa zur Erneuerung - auf einfache Art und Weise möglich.

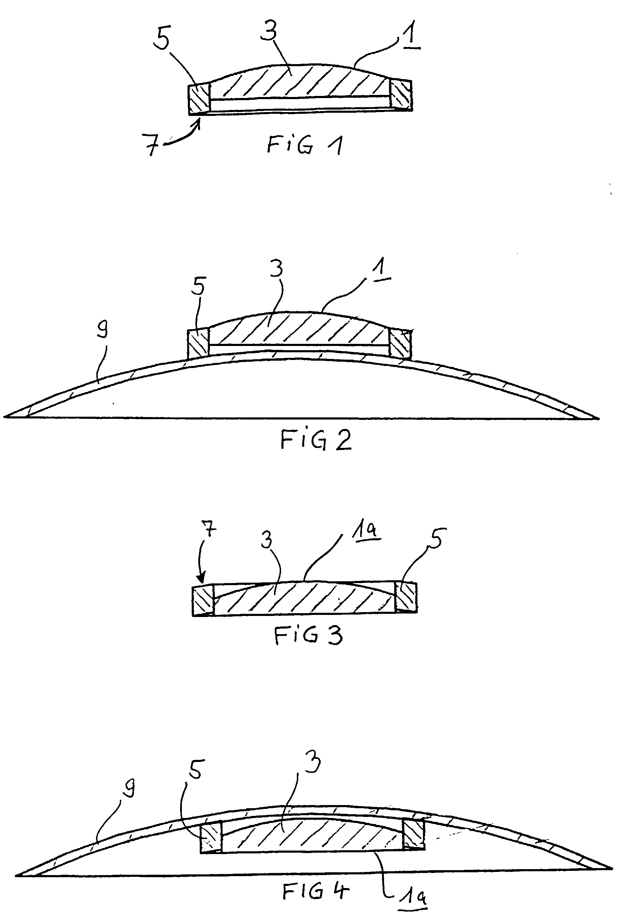

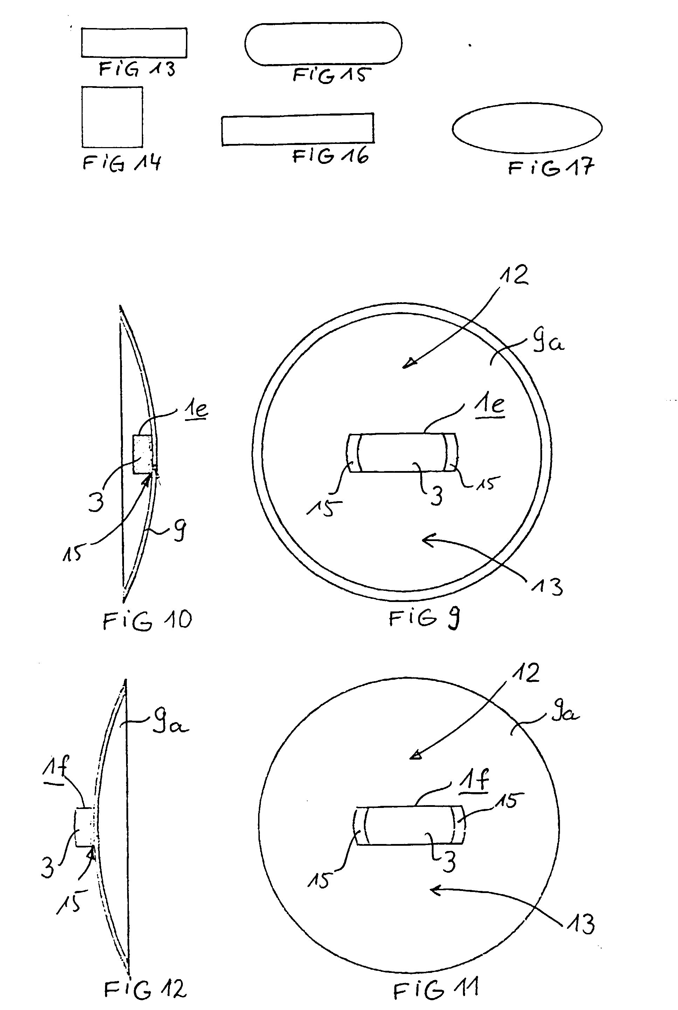

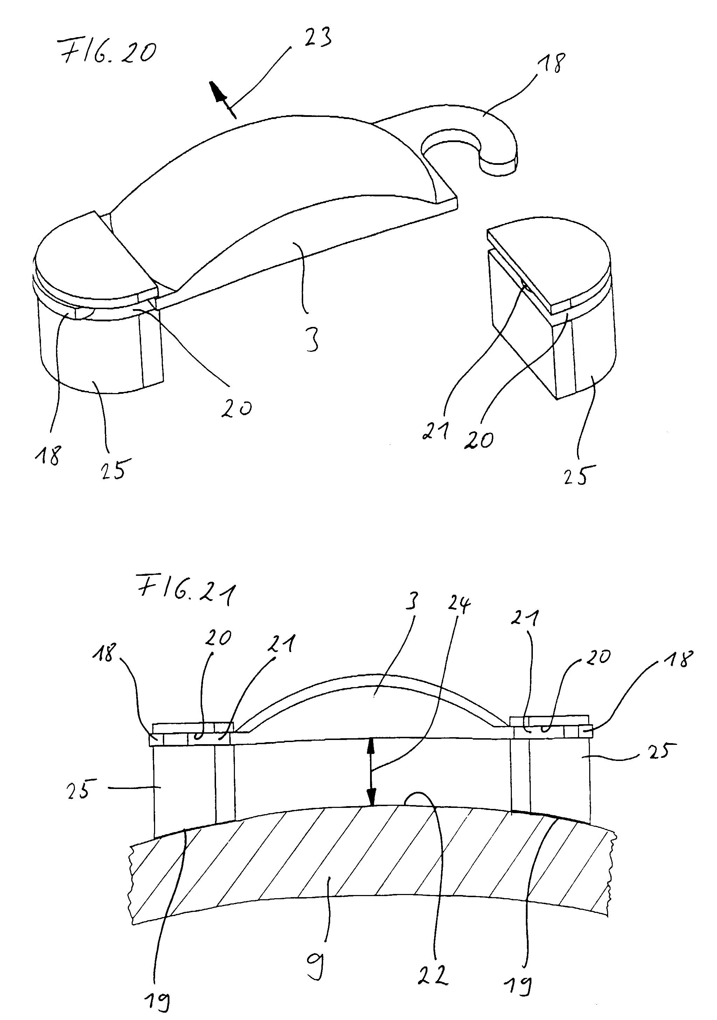

Die Erfindung, weitere Vorteile und Einzelheiten werden nachfolgend anhand von Ausführungsbeispielen und der Zeichnung näher erläutert, wobei die erfindungsgemäßen Ausführungsbeispiele in den Figuren 20-22 dargestellt sind und die Figuren 1-19 in Verbindung mit dem Hauptanspruch als Erläuterung der in dem Unteransprüchen definierten Merkmale dienen. Es zeigen:
- Fig. 1 und 2: ein Hyperokular für eine objektseitige Montage,
- Fig. 3 und 4: ein Hyperokular für eine augenseitige Montage,
- Fig. 5, 6 und Fig. 7, 8: ein Hyperokular mit Form eines Kreisabschnittes mit augenseitiger bzw. objektseitiger Montage,
- Fig. 9, 10 und Fig. 11 und 12: ein Hyperokular in Balkenform mit Zweipunktbefestigung und augenseitiger bzw. objektseitiger Befestigung,
- Fig. 13 bis 17: weitere Formen für ein Hyperokular,
- Fig. 18: zeigt ein Detail eines Hyperokulars entsprechend Fig. 7, bei der die punktförmigen Befestigungsmittel in Teilfixierpunkte unterteilt sind,
- Fig. 19: zeigt exemplarisch eine bikonvexe Linse, und
- Fig. 20 bis 22: zeigen Ausführungsbeispiele von Hyperokularen, bei denen die Hyperokularlinse lösbar an den Befestigungspfosten bzw. der Haltefassung befestigt ist.

Fig. 1 zeigt ein Hyperokular 1 für eine objektseitige (im englischen Sprachgebrauch auch "before the lens" genannte) Befestigung auf einem Brillenglas im Schnitt. Die Hyperokularlinse, im folgenden kurz mit Linse 3 bezeichnet, ist dabei von einer Haltefassung 5 umfaßt, durch die sie festgehalten ist. Zur stabilen Befestigung der gesamten Anordnung weist die Haltefassung 5 an ihrer dem Brillenglas zugewandten Stimfläche 7 eine dem Brillenglas angepaßten Oberfläche auf. Diese ist bei dem vorliegenden Beispiel konkav nach Art eines stumpfwinkligen Kegelmantelringes ausgebildet und mit einer klebenden Oberfläche versehen. Die klebende Oberfläche kann beispielsweise durch einen nicht näher gezeigten Klebering, eine doppelseitige Klebefolie oder eine sonstige geeignete Hafttechnik, z.B. Kleber, realisiert sein.

Fig. 2 zeigt das Hyperokular 1 in einer auf einem Brillenglas 9 montierten Position. Es ist zu erkennen, daß die Linse 3 in einem Abstand zum Brillenglas 9 positioniert werden kann. Somit können verschiedene Brillenglaskrümmungen ausgeglichen werden.

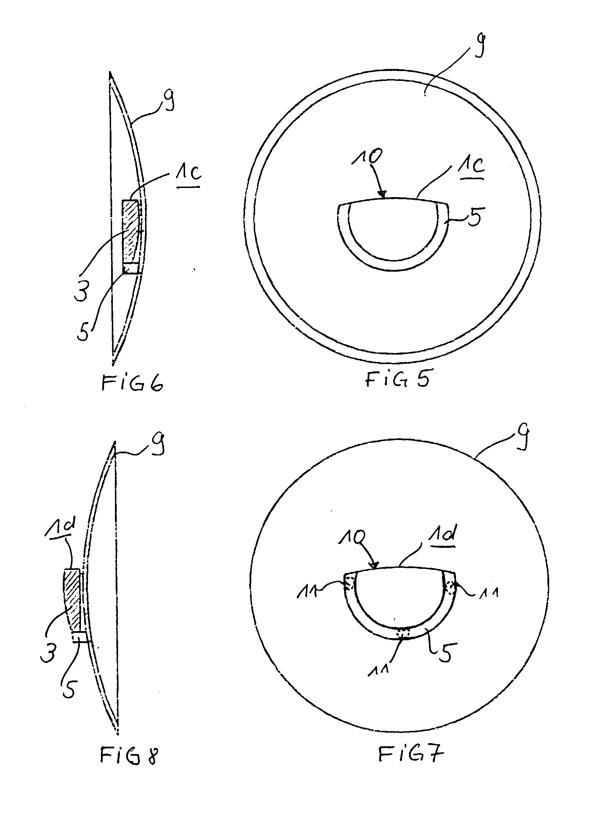

Die Figuren 3 und 4 zeigen ein Hyperokular la wie oben beschrieben, jedoch für eine augenseitige (im englischen Sprachgebrauch als "behind the lens" bezeichnete) Positionierung. In Fig 4 ist deutlich zu erkennen, daß die Linse 3 wesentlich näher am Auge liegt, wodurch sie auch kleiner dimensioniert werden kann. Eine derartige augenseitige Positionierung von Hyperokularen war bisher aus dem Stand der Technik nicht bekannt.

Dabei ist die dem Brillenglas 9 zugewandte Stirnfläche 7 der Haltefassung 5 konvex ausgebildet.

Die Haltefassung 5 ist bei allen hier beschriebenen Hyperokularen bevorzugt aus einem hochelastischen oder weichplastischem Kunststoffwerkstoff, z.B. auch einem Schaum, hergestellt. Auf diese Weise ist eine besonders gute Adaption an die Oberflächengestaltung des Brillenglases 9 gewährleistet. Der besondere Vorteil der Haltefassung 5 liegt darin, daß die Linse 3 an einer beliebigen Stelle auf der Brillenglasoberfläche und in einem beliebigen Abstand zu ihr positionierbar ist. Das Hyperokular hat vorzugsweise eine asphärische Linse. Die Linse selbst ist vorzugsweise aus Kunststoff und einstückig gespritzt. Alternativ sind jedoch auch Glaslinsen möglich.

Die Figuren 5, 6 oder 7, 8 zeigen Brillenglasanordnungen in der Draufsicht und im Schnitt, bei denen das Hyperokular 1c bzw. 1d augenseitig bzw. objektseitig befestigt sind. Die Hyperokulare 1c bzw. 1d haben dabei zumindest annähernd die Form eines Kreisabschnittes, wobei ihre Oberkante 10 etwa geradlinig ist.

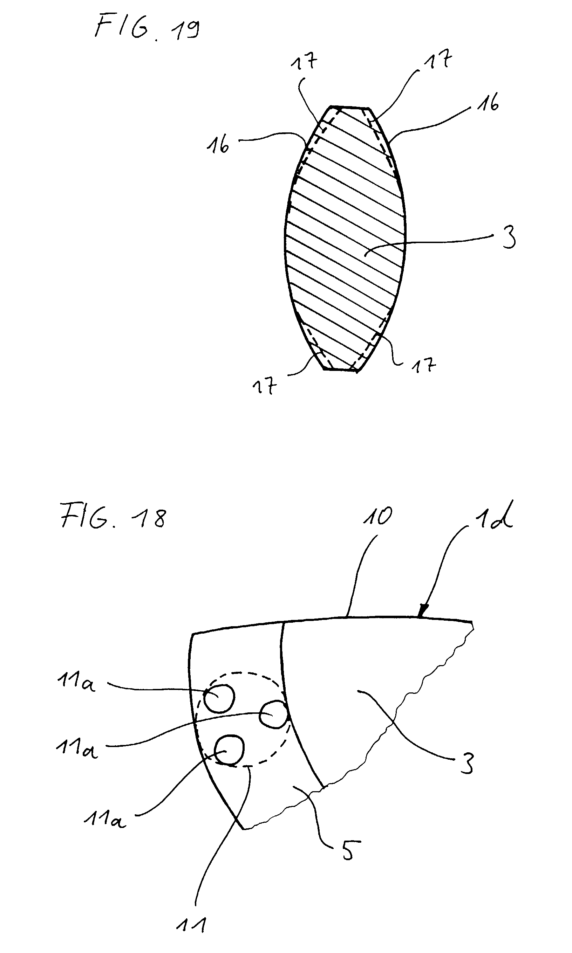

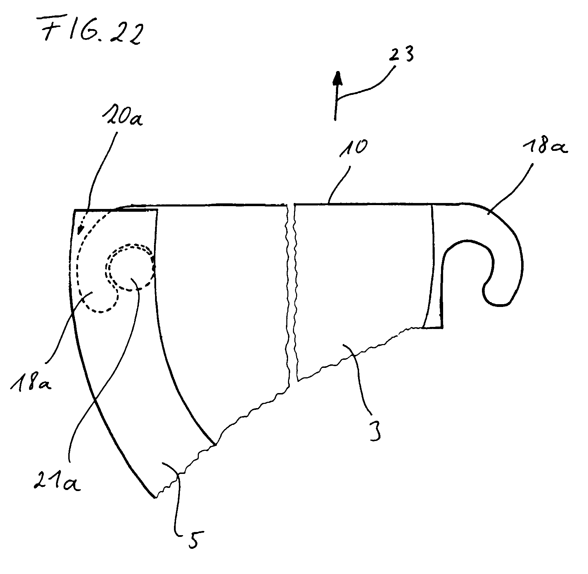

Die in den Figuren 5 bis 8 gezeigte Form der Linse 3 eignet sich sowohl für eine Befestigung mit der Haltefassung 5 als auch für eine Dreipunktbefestigung, an der drei Stellen zwischen dem Brillenglas 9 und der Linse 3 punktförmige Befestigungsmittel 11 angeordnet sind (Fig. 7). Auf diese Weise ist eine besonders stabile Befestigungslage gegeben, bei der die Linse 3 verwakkelungssicher montiert ist. Auch für die Zwei- oder Dreipunktbefestigung eignet sich insbesondere ein nach Art eines doppelseitigen Klebebandes ausgebildetes Befestigungsmittel, das vorzugsweise eine geeignete Stärke zur Erzeugung des benötigten Abstandes aufweist. Gegebenenfalls kann hier auch eine Befestigung mittels eines Kunststoff- oder Silikonmaterials erfolgen. Die punktförmigen Befestigungsmittel 11 können auch, wie in Fig. 18 dargestellt, in mehrere Teilfixierpunkte 11a unterteilt sein. Die Befestiung eines Hyperokulars auf stark gekrümmten Brillenglasoberflächen ist dadurch nochmals verbessert.

Die Figuren 9, 10 und 11, 12 zeigen Anordnungen, bei denen ein balkenförmiges Hyperokular 1e bzw. 1f augen- bzw. objektseitig auf einem Brillenglas 9 befestigt ist, welches als Bifokalglas ausgebildet ist. Die gezeigte Form entspricht einem Kreisausschnitt. Die Befestigung erfolgt bei der Balkenform bevorzugt mittels Klebetechnik ohne Haltefassung mit einem Kleberand 15. Ausgehend davon, daß das Brillenglas 9a in einem oberen Bereich 12 für einen Fernbereich und in einem unteren Bereich 13 für einem Nahbereich dimensioniert ist, ist nunmehr auch ein Hyperokularbereich in der Mitte des Brillenglases 9 realisiert. Durch die schmale breite Ausbildung des Hyperokulars 1e bzw. 1f ergibt sich ein breites Sehfeld, das durch seine Form eine Orientierungsunterstützung bietet, wodurch die Augen des Brillenträgers geführt werden. Hierdurch ist auch eine Anwendung, nicht nur bei starken Sehbehinderungen, sondern auch für bestimmte Arbeiten im extremen Nahbereich, beispielsweise bei Juwelieren oder Feinmechanikern, denkbar. Für derartige Anwendungen ist dann ein Wechsel von Brillen oder ein Aufsetzen von Nahlupen nicht mehr nötig.

Die Figuren 13 bis 17 zeigen beispielhaft weitere mögliche Außenkonturen für Hyperokulare, wie sie insbesondere für eine Zweipunktbefestigung zur Erzeugung eines Trifokalbrillenglases geeignet sind.

In Fig. 19 ist eine Linse 3 in bikonvexer Ausführung dargestellt. Die optisch aktiven Oberflächen dieser Linse können sowohl sphärisch als auch asphärisch gekrümmt sein. Die sphärische Krümmung ist durch die durchgezogene Linie 16 angedeutet. Diese Linie verläuft auf einer Kreisbahn. Die Linsenfläche ist dementsprechend ein Ausschnitt aus einer Kugeloberfläche. Eine asphärische Form der optisch aktiven Oberfläche der Linse 3 ist durch die gestrichelten Linien 17 angedeutet. Die Linsenkrümmung weicht hier von der Kugelflächenform ab und ist zum Rand der Linse hin stärker gekrümmt.

In den Fig. 20 bis 22 sind Ausführungsbeispiele eines erfindungsgemäßen Hyperokulars dargestellt, bei dem die Linse 3 lösbar an den Befestigungspfosten (25) bzw. an der Haltefassung 5 befestigt ist. Bei dem Ausführungsbeispiel gemäß Fig. 20 und 21 ist an die Schmalseiten einer balkenförmigen Linse 3 jeweils ein Schnapphaken 18 angeformt. Beide Schnapphaken 18 öffnen sich zur selben Seite hin. Der Befestigungspfostens 25 ist ein in Längsrichtung abgeschnittenes zylindrisches Teil. Die eine, im Montagezustand einer Brillenglasoberfläche zugewandte Stirnseite 19 des Befestigungspfosten 25 dient zur Befestigung an dem Brillenglas (vgl. Fig. 21). An seinem der Brillenglasoberfläche im Montagezustand abgewandten Ende weist der Befestigungspfosten 25 eine quer zu seiner Längsrichtung verlaufende umlaufende Ausnehmung 20 auf. Die Ausnehmung 20 wird radial nach innen durch einen zentralen Befestigungskern 21 begrenzt. Im Montagezustand (Fig.21) liegt der Schnapphaken 18 in der Ausnehmung 20 ein und umklammert den Befestigungskern 21. Je nach Anordnung der Ausnehmung 20 am Befestigungspfosten 25 läßt sich der Abstand 24 zwischen Brillenglas 9 und Linse 3 variieren. Eine Variierung des Abstandes 24 ist auch möglich, wenn Befestigungspfosten 25 mit unterschiedlichen Längen bzw. Höhen vorgesehen werden. Die Montage des Hyperokulars erfolgt ganz einfach dadurch, daß zunächst die Befestigungspfosten 25 an der Linse 3 befestigt werden, indem die Schnapphaken 18 in die Aufnehmung 20 eingeschoben und der Schnapphaken 18 über den Befestigungskern 21 geschoben wird. Das so vormontierte Hyperokular wird dann auf die Brillenglasoberfläche aufgeklebt. Um die sich hinter der Linse 3 befindlichen Bereiche 22 der Brillenglasoberfläche leicht reinigen zu können, kann die Linse 3 ganz einfach von den Befestigungspfosten 25 gelöst werden, indem sie in Richtung des Pfeiles 23 bewegt wird. Auf diese Weise ist auch ein Austausch der Linsen 3 ermöglicht.

In Fig.22 ist eine Hyperokular entsprechend Fig. 7 und 8 dargestellt. An die kreisabschnittförmige Linse 3 ist auf jeder Seite ein an den oberen Rand 10 der Linse 3 angrenzender Schnapphaken 18a angeformt. Die Haltefassung 5 weist in ihrem dem Schnapphaken 18a im Montagezustand zugeordneten Bereich eine dem Befestigungspfosten 25 der Fig. 20 und 21 entsprechende Ausgestaltung, nämlich eine Ausnehmung 20a, und einen Befestigungskern 21a auf. Die Befestigung an der bzw. die Entfernung von der Haltefassung 5 erfolgt auf prinzipiell gleiche Weise wie bei dem Ausführungsbeispiel gemäß Fig. 20 und 21.

### Bezugszeichenliste

- 1,1a,1b,1c,1d,1e,1f: Hyperokular
- 3: Linse
- 5: Haltefassung
- 7: Stirnfläche
- 9,9a: Brillenglas
- 10: Oberkante
- 11: Befestigungsmittel
- 11a: Teilfixierpunkt
- 12: oberer Bereich
- 13: unterer Bereich
- 15: Kleberand
- 16: Linie
- 17: Linie
- 18, 18a: Schnapphaken
- 19: Stirnseite
- 20, 20a: Ausnehmung
- 21, 21a: Befestigungskern
- 22: Bereich
- 23: Pfeil
- 24: Abstand
- 25: Befestigungspfosten

## Patentansprüche

1. Hyperokular für ein Brillenglas, mit einer Linse (3) und wenigstens einem die Linse haltenden Halteelement mit wenigstens einer Stirnfläche zur Befestigung am Brillenglas, dadurch gekennzeichnet,
daß das Halteelement, entweder als Haltefassung (5) oder als Befestigungspfosten (25) ausgebilded ist und den Rand der Linse nur teilweise umfaßt, und daß die Linse (3) mit einer Schnappverbindung lösbar am Halteelement befestigt ist.

2. Hyperokular nach Anspruch 1,
dadurch gekennzeichnet,
daß die Linse (3) kreisabschnittförmig ausgebildet ist und daß das Halteelement als Haltefassung (5) den kreisbogenförmigen Rand der Linse umfaßt.

3. Hyperokular nach Anspruch 2,
dadurch gekennzeichnet,
daß an den Enden des kreisbogenförmigen Randes der Linse (3) jeweils ein in einer zur Planebene der Linse parallelen Ebene verlaufender Schnapphaken (18a) angeformt ist, wobei die Schnapphaken im Montagezustand in einer stirnseitigen Ausnehmung (20a) der Haltefassung (5) einliegen und einen in dieser Ausnehmung angeordneten Befestigungskern (21a) umfassen.

4. Hyperokular nach Anspruch 2,
gekennzeichnet durch
eine 3-Punkt-Befestigung der Haltefassung (5) an einer Brillenglasoberfläche.

5. Hyperokular nach Anspruch 2,
dadurch gekennzeichnet,
daß die Haltefassung (5) aus einem hochelastischen oder weichplastischen Kunststoff hergestellt ist.

6. Hyperokular nach Anspruch 5,
dadurch gekennzeichnet,
daß der Kunststoff ein Schaum ist.

7. Hyperokular nach Anspruch 2,
dadurch gekennzeichnet,
daß die zur Verklebung mit einem Brillenglas dienende Stirnfläche der Haltefassung (5) der Krümmung einer augen- bzw. objektseitigen Brillenglasoberfläche angepaßt ist.

8. Hyperkular nach einem der Ansprüche 1-7,
dadurch gekennzeichnet,
daß der Abstand der Linse (3) von einer Brillenglasoberfläche über die Höhe der Haltefassung (5) einstellbar ist.

9. Hyperokular nach Anspruch 1,
dadurch gekennzeichnet,
daß die Linse (3) eine längliche, sich im Montagezustand in Breitenrichtung des Sehfelds erstreckende Form, etwa eine Balkenform aufweist und an ihren Schmalseitenrändern von je einem Halteelement, nämlich einem Befestigungspfosten (25) gehalten ist.

10. Hyperokular nach Anspruch 9,
dadurch gekennzeichnet,
daß sich der Befestigungspfosten (25) über die gesamte Breite der Schmalseiten erstreckt.

11. Hyperokular nach Anspruch 9,
dadurch gekennzeichnet,
daß an die Schmalseiten der Linse je ein in einer zur Planebene der Linse parallelen Ebene verlaufender Schnapphaken (18) angeformt ist, wobei die Schnapphaken im Montagezustand in einer sich vom Umfang des Befestigungspfosten (25) radial nach innen erstreckenden Ausnehmung (20) einliegen und einen in der Ausnehmung zentral angeordneten Befestigungskern (21) umfassen.

12. Hyperokular nach Anspruch 9,
dadurch gekennzeichnet,
daß der Befestigungspfosten (25) ein im wesentlichen zylindrisches Teil mit einer Abflachung ist, also einen kreisabschnittförmigen Querschnitt aufweist, wobei die Abflachungen im Montagezustand einander zugewandt sind.

13. Hyperokular nach Anspruch 8,
dadurch gekennzeichnet,
daß der Abstand der Linse von der Brillenglasoberfläche über die Länge bzw. die Höhe des Befestigungspfostens (25) einstellbar ist.

## Claims

1. Additional ocular for a spectacle lens, having a lens (3) and at least one holding element which holds the lens and has at least one end face for fastening to the spectacle lens; characterized in that the holding element is designed either as a holding mount (5) or as a fastening post (25), and only partly grips the rim of the lens; and in that the lens (3) is fastened detachably to the holding element by means of a snap-action connection.

2. Additional ocular according to Claim 1, characterized in that the lens (3) is designed in the shape of a circular segment; and in that, as a holding mount (5), the holding element grips the rim of the lens which is in the shape of a circular arc.

3. Additional ocular according to Claim 2, characterized in that a snap-action hook (18a), extending in a plane parallel to the flat plane of the lens, is integrally formed in each case on the ends of the rim of the lens (3) which is in the shape of a circular arc, it being the case that in the assembled state the snap-action hooks engage in an end-face cutout (20a) in the holding mount (5) and grip a fastening core (21a) arranged in this cutout.

4. Additional ocular according to Claim 2, characterized by a 3-point fastening of the holding mount (5) on a spectacle lens surface.

5. Additional ocular according to Claim 2, characterized in that the holding mount (5) is produced from a highly flexible or plasticized polymer.

6. Additional ocular according to Claim 5, characterized in that the polymer is a foam.

7. Additional ocular according to Claim 2, characterized in that the end face, serving the purpose of bonding to a spectacle lens, of the holding mount (5) is adapted to the curvature of a spectacle lens surface on the eye side or object side.

8. Additional ocular according to one of Claims 1-7, characterized in that the distance of the lens (3) from a spectacle lens surface can be set via the height of the holding mount (5).

9. Additional ocular according to Claim 1, characterized in that the lens (3) has an elongated shape, for example the shape of a bar, which extends in the assembled state in the direction of the width of the field of view, and is held at the rims of its narrow sides by one holding element each, specifically a fastening post (25).

10. Additional ocular according to Claim 9, characterized in that the fastening post (25) extends over the entire width of the narrow sides.

11. Additional ocular according to Claim 9, characterized in that a snap-action hook (18), extending in a plane parallel to the flat plane of the lens, is integrally formed in each case on the narrow sides of the lens, it being the case that in the assembled state the snap-action hooks engage in a cutout (20) extending radially inwards from the circumference of the fastening post (25) and grip a fastening core (21) arranged centrally in the cutout.

12. Additional ocular according to Claim 9, characterized in that the fastening post (25) is an essentially cylindrical part with a flat, that is to say it has a cross-section in the shape of a circular segment, the flats facing one another in the assembled state.

13. Additional ocular according to Claim 8, characterized in that the distance of the lens from the spectacle lens surface can be set via the length or the height of the fastening post (25).

## Revendications

1. Oculaire supplémentaire pour un verre de lunette, équipé d'une lentille (3) et d'au moins un élément de retenue maintenant la lentille, avec au moins une surface d'extrémité en vue de la fixation au verre de lunette, caractérisé en ce que l'élément de retenue est réalisé soit sous la forme d'une monture de retenue (5) soit sous la forme d'un montant de fixation (25) et entoure seulement partiellement le bord de la lentille et en ce que la lentille (3) fixée de façon amovible à l'élément de retenue par une liaison par déclic.

2. Oculaire supplémentaire selon la revendication 1, caractérisé en ce que la lentille (3) est réalisée sous la forme d'un segment de cercle et en ce que l'élément de retenue entoure en tant que monture de retenue (5) le bord en forme de segment de cercle de la lentille.

3. Oculaire supplémentaire selon la revendication 2, caractérisé en ce qu'aux extrémités du bord en forme de segment de cercle de la lentille (3) est façonné un crochet de fixation (18a) s'étendant dans un plan parallèle au plan de la lentille, de telle sorte que les crochets de fixation pénètrent à l'état monté dans un évidement latéral (20a) de la monture de maintien (5) et entourent une âme de fixation (21a) disposée dans cet évidement.

4. Oculaire supplémentaire selon la revendication 2, caractérisé par une fixation en trois points de la monture de retenue (5) sur une surface de verre de lunette.

5. Oculaire supplémentaire selon la revendication 2, caractérisé en ce que la monture de retenue (5) est réalisée en matière plastique à élasticité élevée ou souple.

6. Oculaire supplémentaire selon la revendication 1, caractérisé en ce que la matière plastique est une mousse.

7. Oculaire supplémentaire selon la revendication 2, caractérisé en ce que la surface servant au collage avec un verre de lunette de la monture de retenue (5) est adaptée à la courbure d'une surface de verre de lunette côté oeil ou côté objet.

8. Oculaire supplémentaire selon l'une quelconque des revendications 1 à 7, caractérisé en ce que l'écartement de la lentille (3) d'une surface de verre de lunette est réglable sur la hauteur de la monture de retenue (5).

9. Oculaire supplémentaire selon la revendication 1, caractérisé en ce que la lentille (3) présente une forme allongée, approximativement une forme de poutre s'étendant à l'état monté dans le sens de la largeur du champ de vision et est maintenue sur les bords de ses petits côtés par un élément de retenue, notamment, un montant de fixation (25).

10. Oculaire supplémentaire selon la revendication 9, caractérisé en ce que le montant de fixation (25) s'étend sur toute la largeur des petits côtés.

11. Oculaire supplémentaire selon la revendication 9, caractérisé en ce que, sur les petits côtés de la lentille est façonné un crochet de fixation (18) s'étendant dans un plan parallèle au plan de la lentille, les crochets de fixation pénétrant à l'état monté dans un évidement (20) s'étendant radialement vers l'intérieur depuis la périphérie du montant de fixation (25) et entourent une âme de fixation (21) située au centre de l'évidement.

12. Oculaire supplémentaire selon la revendication 9, caractérisé en ce que le montant de fixation (25) est sensiblement un élément cylindrique avec un méplat, présentant ainsi une section en forme de segment de cercle, les méplats étant tournés l'un vers l'autre à l'état monté.

13. Oculaire supplémentaire selon la revendication 8, caractérisé en ce que l'écartement de la lentille de la surface du verre de lunette est réglable sur la longueur ou la hauteur du montant de fixation (25).
